# EUROPEAN PATENT SPECIFICATION

(11) **EP 3 152 284 B1**
(45) Date of publication and mention of the grant of the patent: **14.02.2024**
(21) Application number: 15727394.7
(22) Date of filing: 04.06.2015
(51) Int. Cl.: C11B 11/00

(54) **SEPARATION OF WAX AND FIBERS FROM PLANTS**
TRENNUNG VON WACHS UND FASERN AUS PFLANZEN
SÉPARATION DE CIRE ET DE FIBRES D'ORIGINE VÉGÉTALE

(30) Priority: 04.06.2014 DK 201470324
(43) Date of publication of application: 12.04.2017
(73) Proprietor: Jena Trading ApS, 4270 Høng (DK)
(72) Inventor: VINTHER, Per, DK-4270 Høng (DK); LAWTHER, John Mark, DK-4000 Roskilde (DK)
(74) Representative: Guardian IP Consulting I/S
(86) International application number: PCT/EP2015/062497
(87) International publication number: WO 2015/185685

(56) References cited:
- WO-A2-03/092628
- WO-A2-2006/047445
- US-A- 1 715 194
- Tbh Web Team: "From Desert Plants to Dollars:Candelilla Wax Makind, and Wax Products", , 20 April 2004 (2004-04-20), XP055212079, Retrieved from the Internet: URL:http://www.texasbeyondhistory.net/waxc amps/techniques.html [retrieved on 2015-09-09]
- Del Río José C. ET AL: "A Comprehensive Characterization of Lipids in Wheat Straw", Journal of Agricultural and Food Chemistry, vol. 61, no. 8, 13 February 2013 (2013-02-13), pages 1904-1913, XP55966489, US ISSN: 0021-8561, DOI: 10.1021/jf304252m

## Description

### Field of the invention

The present invention concerns a process for the extracting of wax from plants, in particular from agricultural plants and preferable from agricultural biowaste.

### Background of the invention

Fermentation of carbohydrate biomass has been presented as a promising alternative to petrochemical sources for fuels and other chemical products for many years. Carbohydrate polymers (cellulose and hemicellulose) contain different fermentable sugar monomers (six and five carbon sugars) and are tightly bound to the aromatic polymer lignin. Cellulose, hemicellulose and lignin together with small amounts of protein, pectin, wax and different inorganic compounds constitute the "lignocellulosic biomass", i.e. the dry matter of plants. Lignocellulosic biomass can be broadly classified into virgin biomass, waste biomass and energy crops. Virgin biomass includes all naturally occurring terrestrial plants such as trees, bushes and grass. Waste biomass is produced as a low value byproduct of various industrial sectors such as agricultural (corn stover, sugarcane bagasse, straw, etc.) and forestry. Energy crops are crops with high yield of lignocellulosic biomass produced to serve as a raw material for production of second generation biofuel. Second generation bioethanol production is based on yeast fermentation of the lignocellulosic biomass from municipal and agricultural wastes.

One barrier to the production of ethanol from biomass is that the sugars necessary for fermentation are trapped inside the lignocellulose. Lignocellulose has evolved to resist degradation and to confer hydrolytic stability and structural robustness to the cell walls of the plants. This robustness is caused by crosslinking between the carbohydrate polymers cellulose and hemicellulose, and the lignin via ester and ether linkages. To extract the fermentable sugars, the celluloses must be disconnected from the lignin, and then hydrolyzed to break it down into simple monosaccharides. Another challenge to biomass fermentation is the high percentage of pentoses in the hemicellulose, such as xylose. Unlike hexoses such as glucose, pentoses are difficult to ferment.

Three main process steps are involved in the conversion of lignocellosic biomass into bioethanol: 1) pretreatment of the biomass to disrupt the cell-wall matrix including the cross-linking between the carbohydrate polymers and lignin; and to depolymerize and solubilize the hemicellulose polymer; 2) enzymatic hydrolysis of the cell wall cellulose and in some cases hemicellulose into monomers; and 3) fermentation of the monomers into ethanol.

There are several ways of pretreating biomass depending on the type of biomass (feedstock) and the subsequent technology applied. Thermochemical treatment, e.g. dilute acid treatment with and without rapid steam decompression or ammonia treatment and hydrothermal treatment are among the investigated pre-treatments.

The predecessor of Inbicon, a Danish energy company, began looking at using biomass for production of energy in the 1990s. The first pilot plant was opened in 2003, and it could process 2.4 metric tons of biomass/day. By 2005, the pilot plant was scaled up and could process 24 metric tons/day. The first Inbicon Biomass Refinery was opened at Kalundborg, Denmark in 2009 and in the demonstration plant, they were able to use 100 tonnes of biomass feedstock per day. Inbicon's future goal is a plant that could use 1,200 tonnes of feedstock per day. The optimal biomass feedstock the company's technology is designed for is wheat straw. However, they have also tested corn stover, grasses, bagasse, arundo, sorghum, and palm oil residue. Therefore, it is an adaptable process that can utilize the most profitable feedstock.

Key to Inbicon biomass refineries is the Inbicon core technology, which consists of mechanical and hydrothermal pretreatment followed by enzymatic hydrolysis. The Inbicon core technology solubilizes lignin and unlocks cellulose and hemicellulose to be converted into sugars. These sugars can be fermented into ethanol.

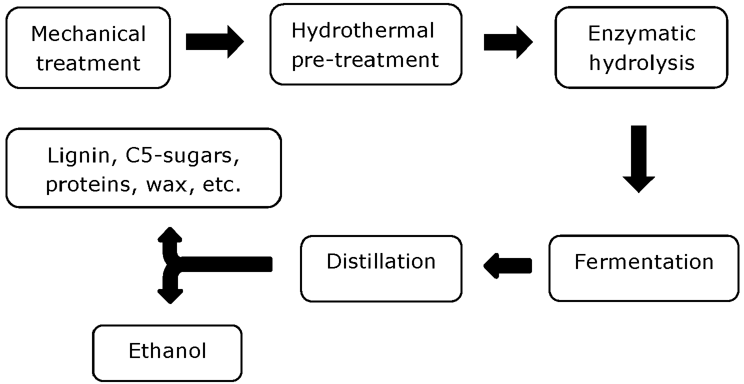

Inbicon utilizes a hydrothermal pre-treatment process after a mechanical conditioning (precutting and chopping) of the feedstock (US 8,123,864). The premise of this process is to produce a fibre fraction and a liquid fraction through an extraction using hot water. In the fibre fraction this process achieves greater than 80% of the lignin present in the initial feedstock, whereas the liquid fraction contains: C5 sugars, alkali chlorides and fermentation inhibitors. The main fermentation inhibitor present is acetic acid. During the initial step of the hydrothermal pretreatment process the feedstock is soaked and simultaneously placed in temperatures of up to 100°C and ambient pressure. This allows for the extraction of air present and saturates the feedstock with water. The next step entails a pressurized treatment at elevated temperatures in the range of 170 to 230°C through the addition of hot water or steam for approximately 5-15 minutes. Throughout the hydrothermal pretreatment, there are acids formed that causes the fibre fraction to be nearly neutral in pH. The main benefit of this is that the pH will barely have to be adjusted for enzymatic liquefaction.

The idea behind Inbicon's hydrothermal pretreatment is not to remove the hemicellulose and lignin from the fibre fraction but to nullify its protection of cellulose. Inbicon reasons that when lignin is melted in the presence of water, because of its hydrophobic nature, it will form micro-droplets that solidify at lower temperatures. The conditions used in the pretreatment also hydrolyze hemicellulose. Therefore, the creation of these lignin micro-droplets and the hydrolysis of hemicellulose neutralize the two component's protection of cellulose. This method keeps feedstock in its native fibrous state, while enhancing the efficiency of the subsequent enzymatic hydrolysis.

In the C5+C6 mixed sugar fermentation concept which is currently in operation at Inbicon's Kalundborg demonstration plant, both C5 and C6 sugars are fermented and subsequently distilled to ethanol - for instance to be used as transportation fuel. Had C5 sugars been used for C5 molasses, C5 sugars would go directly for evaporation instead of enzymatic hydrolysis. From fermentation and on, standard first generation technology and equipment can be used.

After distillation, the remaining composition consists of both solid and liquid fractions. Solids are separated and can be used for power and heat production. The liquid fraction is evaporated to produce a vinasse which can be used for biogas production

Inbicon has also developed a process for non-sterile fermentation of bioethanol (US 8,187,849); a methods for producing ensiled biomass (US 8,187,848); and a methods for reducing enzyme consumption in second generation bioethanol fermentation in the presence of lignin (US 7,972,826).

One of the effects of the pre-treatment is the removal of wax from the straw (Kristensen; Hansen). The wax is separated together with other solids and used for power or heat production.

Plant leaf and stem surfaces are coated with a thin layer of waxy material that has a myriad of functions. This layer is microcrystalline in structure and forms the outer boundary of the cuticular membrane, i.e. it is the interface between the plant and the atmosphere. It serves many purposes, for example to limit the diffusion of water and solutes, while permitting a controlled release of volatiles that may deter pests or attract pollinating insects. The wax provides protection from disease and insects, and helps the plants resist drought. As plants cover much of the earth's surface, it seems likely that plant waxes are among the most abundant of all natural lipids. The range of lipid types in plant waxes is highly variable, both in nature and in composition. The amount of each lipid class and the nature and proportions of the various molecular species within each class vary greatly with the plant species and the site of wax deposition (leaf, stem, flower, fruit, etc.).

Commercially available plant waxes are not very common, partly due to a shortage of economically attractive production methods for extraction of wax from commonly cultivated agricultural plants and partly because of cheap sources from the competing petrochemical industry.

The jojoba plant (Simmondsia chinensis), which grows in the semi-arid regions of Mexico and the U.S.A., is unique in producing wax esters rather than triacylglycerols in its seeds, and it has become a significant crop.

The leaves of the carnauba palm, Copernicia cerifera that grows in Brazil, have a thick coating of wax ("carnauba wax"), which can be harvested from the dried leaves.

Other vegetable "waxes" such as bayberry or Japan wax are better described as "tallows" as they consist mainly of high melting triacylglycerols.

Plant waxes have traditionally been extracted by use of organic solvents such as chloroform, benzene and hexane followed by solvent evaporation and purification. Recently, an extraction process using supercritical CO₂ has been disclosed.

Plant waxes are highly valued alternatives to waxes coming from the petrochemical industry, and may be used as natural and "green" substitutes for the mineral oil-based waxes in all sorts of use, including in cosmetics, medical additives, lubricants, polishes, surface coatings (wood, leather, garment, etc), inks, paints, garment, etc., and even for use in candlelight.

Today, the only commercial plant waxes come from the jojoba plant and carnauba palm, but the production is far from being able to cover the potential market. Thus, there is a need for new ways of produce plant waxes in high quantum and at a relatively low price.

US1712194A provides an apparatus for extracting wax from candelilla, and suggests treatment of a mixture of wax and finely divided non-waxy matter (devoid of plant fibers) with hot (boiling) water and action of steam in an in 1929 well-known manner to separate waxy matter from the non-waxy matter. The use of boiling water in a traditional separation method is further supported by the teaching of 'Texas beyond history' (texasbeyondhistory.net/waxcamps/techniques.html), where it is further taught to boil the crude wax from candela plant (in a mixture with solid plant matter) with sulphuric acid.

WO2006/047445A2 discloses a method for preparing a biomass, specifically algae, for improved extraction of desired products; where lipids are preferably extracted with an effective amount of suitable organic solvents, such as chloroform, methanol, hexane, etc.

Rio et al 2013 (dx.doi.org/10.1021/jf304252m) disclose a method of extracting wax from plant material, such as wheat straw, by organic solvent extraction.

### Summary of the invention

The present invention concerns a process for the extraction of wax from plants, in particular from agricultural plants and preferable from agricultural bio-waste such as straw.

More particularly, the invention concerns a method for separating wax-containing plant material into a wax fraction and a fiber fraction partly depleted of wax, which method comprises the following steps:
a. providing a sample of plant fines enriched in plant wax, wherein the sample of plant fines enriched in wax is resulting from fractionation of straw being mechanically dry-treated at ambient temperature,
b. adding water to the sample of plant fines in a ratio of water:plant fines of at least 5:1 (by weight) followed by mixing and agitation at a temperature adjusted for solubilizing water soluble components in the mixture,
c. adding one or more enzymes to the mixture and adjusting the temperature and pH to optimize the activity of the enzyme(s) added, the enzyme(s) being suitable for degrading proteins associated with the wax in the sample of plant fines,
d. heating the enzyme-treated mixture to a temperature whereby the wax is liquefied and the enzyme(s) inactivated, and
e. separating the wax from the mixture.

The sample of plant fines enriched in plant wax is obtained in a dry process comprising mechanical processing including cutting and crushing (chopping) the plant feedstock followed by fractionation according to weight/size (e.g. by sieving), where the fraction of small and/or light plant fines are typically without or with a deduced amount of wax and thus discarded for other uses, such as fermentation, combustion, use in building material or as litter for domestic animals. Hereby more than about 50%, 60%, 70% or 80% of all plant material from the feedstock may be removed before the next step, the wet process, together with impurities from the harvest.

The plant material (feedstock) is selected from cereals, high energy grasses, sugar cane, leaves from palm trees, etc., more preferably bio-waste from cereals such as wheat, rye, barley, oats, sorghum (durra), rice, or from high energy grasses.

In the wet process an aqueous liquid such as water is added to the plant fines at a water to plant matter ratio of at least 5:1, such as 10:1 and where the temperature is adjusted for solubilizing water soluble components in the mixture.

The temperature and pH are then adjusted to optimize the activity of enzyme(s) added for degrading one or more components, apart from wax, associated with the wax in the sample of plant fines, such as protein. The enzyme(s) are preferably selected from the group of proteases such as from the group of endo- and/or exo-peptidases. The enzyme-treated liquid mixture may be mechanically treated, e.g. in a wet-mill, in order to assist the liberation of wax partly associated with remaining plant matter, e.g. protein, fibers, etc.

After liberation of wax from the plant matter, the mixture is heated to melt and liquefy the wax. The heating should preferably also inactivate the enzyme(s). In the next step, remaining plant matters/fibers are separated and removed from the liquid phase, e.g. by decanting of the liquid phase. In the final step, the wax phase is separated from the aqueous phase, e.g. by lowering the temperature in order to solidify the wax phase for easy removal.

The wax may be used as it is or it may be further purified by removing all or some of the remaining impurities from the wax phase.

### The drawings

**Figure 1** shows one example of a process stream in the wet process.
**Figure 2** shows a differential scanning calorimetry (DSC) analysis of a wheat straw wax. One curve shows the monitoring of mass change as the sample is heated from ambient temperature up to 630° C. This shows that the wax is stable up to around 210° C, after which decomposition onsets. The other curve shows the monitoring of heat energy changes within the sample during the same heating regime. The curve shows a clear endotherm at 65-70° C, due to melting of the wax.

### Detailed description of the invention

### Definitions:

"Straw" means the remains of an agricultural plant, e.g. a cereal, after the seed head has been removed, i.e. the leaves and the stem/stover (nodes and internodes). Straw may also mean the whole of a high energy grass, such as for example elephant grass.
"Feedstock" means the plant material applied to mechanical treatment, such as for example agricultural bio-waste, high energy grasses or palm leaves.
"Plant fibers", "straw fibers" and "mill generated fiber" mean the fraction of mechanically treated feedstock enriched in fibers and low in wax content.
"Plant fines" and "mill generated fines" means the fraction of mechanically treated feedstock enriched in wax content and low in fibers content.
"Straw fines" means the fiber fraction of mill-generated fines.
"Ambient temperature" means the normal temperature of the surroundings at the place of treatment, and thus normally not influenced by heating or cooling.

As discussed above, wax is a surface component on leaves and the stem of most plants. The present invention may be applied to most kinds of plant feedstock comprising wax. For the purpose of illustrating the invention, wheat straw was selected as a test feedstock, as it contains a substantial amount of wax, is available in high amount as bio-waste from agriculture, an is an example of a feedstock for production of biofuel where wax is a component that needs to be removed in a pre-treatment before fermentation. Traditionally wax is burned in the process of producing biofuel. Other feedstock may be treated in the same way, or with minor modifications obvious to the skilled person.

The plant feedstock, such as bio-waste, may alternatively be used as a source of combustible material for power and heat supply in a power and/or heat plant, where removal of a large part of the wax leads to an improved combustion process with less pollution and less problems with tar in the combustion chamber. In another embodiment of the invention, the mechanically de-waxed straw has excellent absorbency properties when used as litter for domestic animals. Another example of use of the de-waxed plant material, e.g. minced straw, is in building material, such as in chipboards and the like.

The work leading to the present invention was initially split into a number of key tasks. The first part was the development of a mechanical treatment of the straw, such that the wax may be separated to a large degree from the fibers, whereby both fractions become beneficial in proceeding processes to obtain wax end products and fiber end products low in wax for the conversion of the fiber fraction (low in wax) to biofuel and/or similar downstream products.

The second part of the work performed was based around developing a method suitable for extracting and up-scaling wax recovery from the mechanically treated straw, preferable in an environmentally friendly wet process where organic solvents are avoided.

In the first part of the study, different fractions of mechanically processed wheat straw and untreated wheat straw were extracted with different organic solvents in order to investigate whether the mechanical processing could result in the wax being mechanically separated in one of the fractions. The mechanical treatment consisted of the wheat straw being cut (chopped) in lengths suitable for a subsequent treatment in a suitable mill for deforming the straw (e.g. hammer mill or disc mill). After the mechanical treatment, the comminuted plant material were separated into a fraction containing longer straw fibers (fiber-rich) and a fraction containing smaller parts and particles from the straw (fines). The primary chopping typically results in straw cuts between about 5 and 20 cm in length, the milling further minces the straw to pieces of less than 5 cm in length and the fines is a few mm together with straw fines of up to about 2 cm. It was found out, as can be seen from examples 1 and 2, that wax from the straw is mainly recovered within the fines. A simple dry mechanical processing could therefore be the first step in an up-concentration of wax from the plant feedstock and at the same time obtaining an improved straw portion for further use where a large part of the wax has been removed.

The mechanically part of the invention accordingly relates to a method for separating wax from a dried wax coated plant material, comprising the steps of mechanically processing the plant material in a dry process by using an apparatus adapted for deforming at least the outer surface of the plant material, so that the wax coating is cracked and released from the remaining, partly de-waxed, plant material; separating the plant material in a separator into a fraction A comprising plant material with a relatively high content of cracked and released wax coating and a relatively low content of the remaining, partly de-waxed, plant material, and a fraction B comprising respectively a relatively low content cracked and released wax coating and a relatively high content of the remaining, partly de-waxed, plant material. The separator may take any suitable form, such as for example a sieve, a cyclone and the like.

The wax content of different plant feedstock depends on properties such as the plant species, variety, the soil and climate on and under which the plant is grown, use of fertilizers and/or pesticides and the part of the plant used as feedstock. As an example, straw from wheat harvested in Denmark comprises about 1 to 3% wax.

The mechanical treatment results in a product which can be separated into two fractions, fraction A and fraction B in a ratio of about 30:70 (w/w) or lower, preferably 25:75 or lower, more preferred 20:80 or lower, and most preferred 15:85 or lower, such as 10:90 or lower. Fraction A will typically contain more than 50% of the total amount of wax in the feedstock, such as 50% or more, 60% or more, 70% or more, 75% or more, and preferably 80% or more, such as at least 85%, 90% or 95% of the total amount of wax in the feedstock. Fraction B accordingly contains less than 50%, 40%, 30%, 25%, 20%, such as at the most 15%, 10% or 5% and of the total amount of wax in the feedstock. The mechanical treatment and separation into fractions A and B accordingly leads to an increase in wax concentration in fraction A of about 66% to more than 400% compared to wax content in the feedstock. The wax constitutes in fraction B down to about 0,75 %, preferable down to about 0,25 %, of the fraction. The wax constitutes up to about 12 %, preferable up to 15 % of the solid material in fraction A or even more.

The present method will allow recovery of more than 40% of the wax present in the feedstock, such as between 40 and 95 %. The recovery is preferable more than 50%, such as between 50 and 90%. Preferably more than 60% of the wax in the feedstock is recovered by the present method and even more preferred more than 65%, 70% or 75% of the wax is recovered. By choosing and optimizing the method steps, the recovery of the wax part of the feedstock may be as high as 80, 85, 90, 95 or 100%.

For the purpose of utilizing fraction B in downstream fermentation or combustion, it is desirable to produce in the mechanical treatment, including fractionation/separation, a ratio of fraction A to fraction B as low as possible with as little wax as possible in fraction B. A further advantage of the mechanical treatment and separation into fractions is the reduction in solid matter to be treated in the following wet process and thus a reduction in size of wet treatment facilities, in energy supply such as heating, in process additives such as water and enzymes, and thus in costs for separation of wax from plant feedstock.

Based on the finding that wax can be partly separated from fibers in a mechanical process, it was investigated whether it could be possible to extract or separate the wax from the fines (fraction A) by use of an aqueous solution instead of the normally used organic solvents. Example 3 demonstrates that it was indeed possible to extract a waxy portion from the fines by cooking the fines in water, leaving a fibrous "waste" portion partly devoid of wax after separation.

A thin, melted, floating and then solidifying waxy layer was observed after sample centrifugation, but was not considered quantitatively adequate for up-scaled separation, because it incorporated no more than 1-2% of the centrifuge tube depth. This suggested that not all of the available waxy material, as seen in solvent extraction analysis, was removed into that layer. However, a tan colored solids layer was also noted above the fiber phase and under the liquid supernatant in the centrifuged samples. This layer was suspected to be a reminiscent of protein rich layers. As it is further known that cuticular waxes are associated with cuticular proteins in grasses/straws, it was investigated whether breakdown of these proteins would assist further wax separation. As can be seen from Example 4, a proteinase treatment with a protease, such as Alcalase^{®}, of the aqueous slurry comprising the fines, followed by heating of the mixture and separation of the waxy portion, showed a significantly increased extraction and recovery of wax from the straw (fines).

Liberation of waxes from plant fines after mechanical treatment can thus be enhanced by enzyme treatment of the comminuted plant feedstock. Especially the plant nodes comprise protein associated with the wax. It was shown by example that the commercial proteases Alcalase^{®} and Promoad^{®} can be used to degrade protein material binding the wax. However, other proteinases be used alone or in combination in order to liberate free wax. Proteases are involved in digesting long protein chains into shorter fragments by splitting the peptide bonds that link amino acid residues. Some detach the terminal amino acids from the protein chain (exopeptidases, such as aminopeptidases, carboxypeptidase A); others attack internal peptide bonds of a protein (endopeptidases, such as trypsin, chymotrypsin, pepsin, papain, elastase). Suitable proteases may be selected among different classes, such as serine proteases, threonine proteases, cysteine proteases, aspartate proteases, glutamic acid proteases and metalloproteases. Many proteases are commercially available, such as for example Alcalase^{®}, a protease from Bacillus licheniformis, Neutrase^{®}, a protease from Bacillus amyloliquefaciens, both being available from Novozymes, Denmark; and Promod^{®}, a protease from *Ananas comosus,* available from BioCatalysts, UK. A combination of two or more enzymes may be beneficial for degrading the plant proteins to a satisfactory degree for liberation and purification of the wax. In order to benefice as much as possible from the enzyme treatment, the conditions for enzyme activity, such as temperature, pH, salt concentration, etc., should be optimized as much as possible in the slurry/mixture. Addition of acid or base to the slurry/mixture may be necessary to reach optimal pH conditions.

The enzyme assisted liberation of wax from parts of the comminuted plant material present in the fines may be supported by a simultaneous or subsequent mechanical treatment, e.g. in a wet mill or the like. Such a wet milling may be repeated as many times as desired. 2, 3 or 4 repetitions will normally suffice. Optimal temperature during enzyme assisted liberation of the wax is selected to suit the enzyme(s) used and operational conditions during wet-milling. The temperature may be 25, 30, 35, 40, 45, 50°C or even higher if thermostable enzymes are used.

Once the enzymatic treatment are considered to be sufficient for a desired or possible degree of liberation of the wax, the temperature of the mixture is raised to melt and liquefy the liberated wax, such that the solid material, e.g. fibers and other remains from the straw can be separated from a liquid part comprising the melted waxes. The melt may be fully or partly liquefied dependent on the composition of the wax and the temperature. The separation may be performed by any form of sieving using any molecular size as desired. Once the solid part has been removed, the wax can be separated from the aqueous part of the liquid or semiliquid. Extraction by organic solvent may be used, especially if a very clean fraction or fractions is/are desired. However, a simple precipitation of the wax by lowering the temperature to below the melting point is preferred, whereafter the solid or semi-solid wax can be separated from the aqueous part, for example by decantation.

When the temperature is raised in order to melt the liberated wax, it is desirable to minimum reach at temperature at which the enzymes are inactivated. This involves melting a waxy phase to above 70°C, preferably above 80, 90 or 95°C and via agitation dispersing the wax in the water phase. The crude wax contains more than 85-90% wax, the rest being different impurities.

Purification of the wax from the waxy extract after separation from the aqueous fraction can be performed by any known method. The waxy extract may comprise different water soluble compounds, such as sugars, lignin (in alkaline solution), protein as well as different plant degradations products. The degree of purification may depend on the intended use of the wax. Different fraction of the wax according to molecular content may also be achieved by known methods if desired. Known methods for purification comprise repeated aqueous extractions in hot water or aqueous solutions. Colour removal may be effected by mild oxidative bleaching.

The invention pertains to, a method for obtaining a composition enriched in wax from plants is provided, comprising:
a. providing a sample of plant fines enriched in plant wax, wherein the sample of plant fines enriched in wax is resulting from fractionation of straw being mechanically dry-treated at ambient temperature,
b. adding water to the sample of plant fines in a ratio of water:plant fines of at least 5:1 (by weight) followed by mixing and agitation at a temperature adjusted for solubilizing water soluble components in the mixture,
c. adding one or more enzymes to the mixture and adjusting the temperature and pH to optimize the activity of the enzyme(s) added, the enzyme(s) being suitable for degrading proteins associated with the wax in the sample of plant fines,
d. heating the enzyme-treated mixture to a temperature whereby the wax is liquefied and the enzyme(s) inactivated, and
e. separating the wax from the mixture.

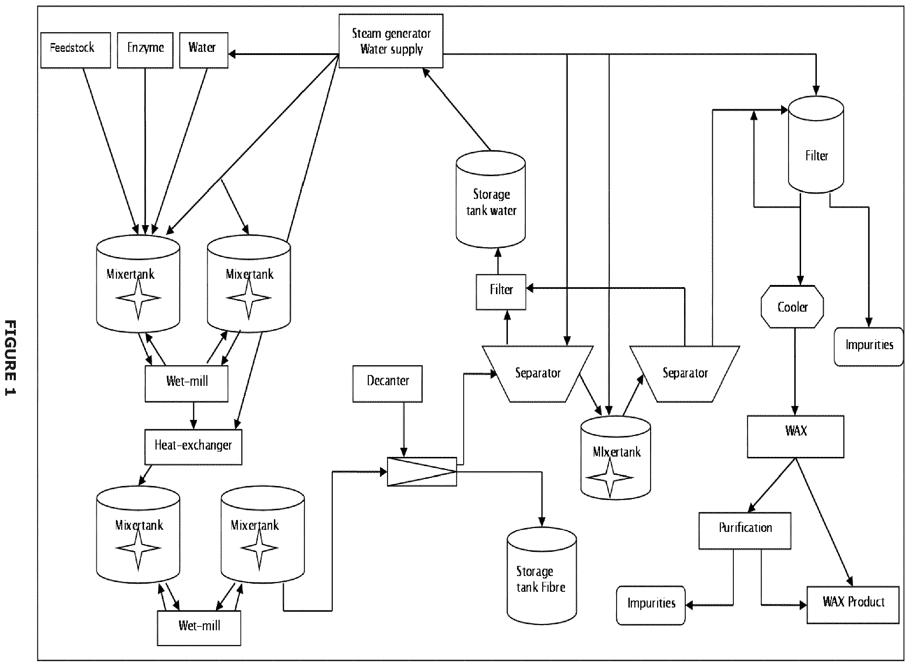

Figure 1 illustrates one example of a process stream in the wet process. The invention is not intended to be limited to the particular example. The process stream may have many different configurations.

In a preferred embodiment of the invention, the one or more enzymes are selected from the group of proteases.

The sample of plant fines enriched in wax is resulting from fractionation of straw being mechanically dry-treated at ambient temperature to release a large part of the wax sitting on the dry surface of the plant parts/straw. The plant fines enriched in plant wax thus comprise wax particles and flakes liberated from the straw during the mechanical treatment. The fractionation may be achieved by use of a separator such as a sieve having sieve openings adapted for retaining said fraction B on one side of the sieve, and allowing said fraction A to pass the sieve. Said fraction A may be forced through the sieve by suction.

The mechanical treatment is preferably cutting and milling and is performed before separation of the plant material in the separator into said fractions A and B. Fraction B may be collected and used as low-wax straw.

An example of a processing plant adapted for separating wax from a dried wax coated plant material comprising a de-waxing container adapted for liquefying the wax content of a plant material arranged in said de-waxing container processing plant may further comprise:
a. a crusher adapted crushing/deforming at least the outer surface of the plant material, so that the wax coating is cracked and released from the remaining, partly de-waxed, plant material,
b. a separator adapted for separating the plant material into a fraction A comprising plant material with a relatively high content of cracked and released wax coating and a relatively low content of the remaining, partly de-waxed, plant material, and a fraction B comprising respectively a relatively low content cracked and released wax coating and a relatively high content of the remaining, partly de-waxed, plant material,
c. a first conveyor adapted for conveying material from the crusher to the separator, and
d. a second conveyor adapted for conveying fraction A from the separator to said de-waxing container.

The first and second conveyors may each be arranged in a dust proof tube, comprising an inlet and an outlet opening arranged at each end of said dust proof tube.

The crusher may comprise a cutter adapted for cutting the plant material to comminuted plant material; a mill adapted for milling the comminuted plant material; and a third conveyor adapted for conveying the comminuted material from the cutter to the mill. The mill may be a hammer mill or a disc mill or any equivalent crushing apparatus.

In a further aspect of the invention the plant (feedstock) is selected from cereals, sugar cane, high energy grasses, leaves from palmtrees and other trees.

In one embodiment of the invention, the cereal is selected from wheat, rye, barley, oats, sorghum (durra), rice, etc. One example of high energy grasses is elephant grass.

In a preferred embodiment, the aqueous liquid added to the fines to produce a slurry which is agitated to produce a mixture of water-soluble parts and solids is water at a temperature preferably above 15°C, such as for example 20, 25, 30, 35 or 40°C. Trial and error indicated that using a 12: 1 ratio by weight of water to straw matter was needed under lab conditions to facilitate the presence of "free water" in the vessels used. At lower ratios, insufficient liqueur was available to allow "agitative washing" of the fiber surfaces and mobilization of any melted waxy film. Thus, the ratio of water to straw matter is preferably higher than 5:1 and more preferably higher than 10:1, such as 12:1 by weight.

During enzyme treatment, the temperature and pH are adjusted to optimize the activity of the enzyme(s) added. Optimal temperature during enzyme assisted liberation of the wax may be 25, 30, 35, 40, 45, 50°C or even higher if thermostable enzymes are used.

After separation of the waxy fraction from the aqueous fraction and the solids, the wax is collected and made ready for use in its raw form, or after removal of impurities and/or colours.

The solid part obtained after removal of the wax from the mixture after the wet treatment is preferably collected, pressed into pellets and burned, e.g. for the generation of power and/or heat.

In one illustrative example of the present invention, wheat straw was collected after harvest of wheat and separation of the grains from a Danish agricultural field on the western side of Zealand. The fractionation steps, including a) mechanical treatment, b) wet treatment of fraction A, and c) separation of raw wax, result in the following yields. Fraction A typically contains between 10 and 40% water, more typically between 15 and 30%, such as between 20 and 25%, for example about 25%.

| **Feedstock:** | Weight/Kg | % | Wax/Kg | %Wax of total | %Wax of fraction |
|---|---|---|---|---|---|
| Wheat straw | 550 | 100 | 8.25 | 1.5 (100) | |
| Fraction A | 82.50 | 15 | 5.50 | 1.0 (66.7) | 6.7⁷ |
| Fraction B | 467.5 | 85 | 2.75 | 0.5 (33.3) | 0.6⁷ |
| **Fraction A:** | 82.50 | 100 | | | |
| Solids¹ | 66.00 | 80 | | | |
| Impurities² | 6.60 | 8 | | | |
| Raw wax solution | 9.90 | 12 | | | |
| **Raw wax:** | 9.90 | 100 | | | |
| Impurities³ | 4.40 | 44.44 | | | |
| Solid wax^{4,5} | 5.50 | 55,56 | | 67⁶ | |

| | | | | | |
|---|---|---|---|---|---|
| 1) Undissolved organic material after enzyme treatment and heating, e.g. residual straw material 2) Undissolved inorganic material, e.g. stones, soil, etc 3) Water-soluble organic material (after cooling), e.g. proteins, peptides amino acids, mono- di- and oligosaccharides, soluble phenolic derivatives from lignin, salts, minerals, etc 4) Solidifies upon cooling of heated "raw wax" 5) To obtain the same amount of solid wax without mechanical treatment and fractionation, about 500 Kg wheat straw needs to be treated in the wet process 6) % recovery of wax in feedstock 7) Solvent -DCM- extractable | | | | | |

In another illustrative example of the present invention, wheat straw was collected after harvest of wheat and separation of the grains from a different Danish agricultural field on the western side of Zealand. The fractionation steps, including a) mechanical treatment, b) wet treatment of fraction A, and c) separation of raw wax, result in the following yields.

| **Feedstock:** | Weight/Kg | % | Wax/Kg | %Wax of total | %Wax of fraction |
|---|---|---|---|---|---|
| Wheat straw | 550 | 100 | 16.5 | 3.0 (100) | |
| Fraction A | 165 | 30 | 13.2 | 2.4 (80) | 8.0⁷ |
| Fraction B | 385 | 70 | 3.3 | 0.6 (20) | 0.9⁷ |
| **Fraction A:** | 165 | 100 | | | |
| Solids¹ | 153,4 | 93 | | | |
| Raw wax solution | 11.6 | 7 | | | |
| **Raw wax:** | 9.90 | 100 | | | |
| Impurities³ | 1.16 | 10 | | | |
| Solid wax^{4,5} | 10.40 | 90 | | 63⁶ | |

| | | | | | |
|---|---|---|---|---|---|
| 1) - 7) see Table above. 1) = 1)+2) from Table above. | | | | | |

By varying feedstock and/or treatment properties more or less solid wax may be separated from the used feedstock.

### Examples

### Example 1

### Straw Fractions produced and supplied by Box Straw ApS.

Amounts of 2-10 Kg samples of fibres and fines to TI, Træ og Miljo.

Wheat Straw raw material.

### Description of work

A Bale of "BS straw", ie as used by BoxStraw ApS, was received in May, 2013,
A 25 kg package of the BoxStraw prepared product (hammer milled preparation) was also received
10 kg of this straw ("BS straw") was sequentially hammer-milled, disc-milled and then sieved into 2 fractions (fine and fibrous) at Ti (June-July 2013)

The fines fraction was defined and obtained via sieving of disc-milled straw through a 0.75 mm mesh.

### Yields:

Fiber fraction: 7900 g ("TI Disc mill generated fines")
Fines fraction: 1770 g ("TI disc mill generated fibre rich")

BoxStraw ApS ("BS") supplied a 10 kg sample of their own production line generated fines (from hammer-milling straw during production - "BS production fines").

These materials were used as the basis of the extraction study.

### Example 2

### Extraction of wax using 3 different solvents, Determination of wax contents.

Different straw fractions/types were examined.

### Straw fibre types:

Disc milled fibre fraction 1: fines ("Disc mill generated fines")
Disc milled fibre fraction 2: fibre rich ("Disc mill generated fibre rich")
Box-Straw fines ("BS production fines")

### Solvents:

Dichloromethane, Chloroform, Ethanol

### Description of work

Within this task, the wax and solvent extractable contents of the various straw fractions, including the original "whole" straw was determined in order to set a base line for a value of extractable material for each fraction and to indicate a "best" solvent for extraction if solvent extraction is found to be needed for up-scaling.

In this phase (after initial experimentation), extraction experiments were performed as follows.
1. 30 g of straw material (either whole straw, BS supplied fines, Disc mill generated fines, or Disc-mill generated fiber rich fraction) was weighed out (balance to 2 decimal points) and placed in a 2 liter, flanged round bottom flask, fitted with flanged multi neck top and condenser.
2. 1 liter of solvent (Dichloromethane, Chloroform or ethanol) was added and the flask + condenser was placed in a heating mantle and the mixture gently refluxed for 2 hours, permitting extraction of waxy (or other components) into the solvent.
3. After allowing boiling to stop, the solvent was decanted from the "fibers" or fines, final isolation via filtration.
4. The solvent portion was evaporated down to leave a waxy deposit.
5. The residual fibre was allowed to dry and then reweighed to establish the mass extracted.

### Results

| Material Type | Mass extracted by solvent (%) | | |
|---|---|---|---|
| | Dichloromethane | Chloroform | Ethanol |
| "Whole straw" | 3.5 | 3.3 | 3.7 |
| Disc mill generated fines | 8.3 | 2.8 | 7.3 |
| Disc mill generated fibre rich | 2.7 | 3.4 | 3·1 |
| BS production fines | 7.5 | 3.9 | 7.9 |

The dichloromethane ("DCM") extracts from the 2 sets of "fines" tested showed (visually and softening upon heating to 70°C) the most wax like character and further characterization was focused on these extracts. Levels of waxy material comprising 7 -·8% of the straw mass were easily extracted from the fines materials. The fines clearly contain more extractable wax than the whole straw or fibrous fractions obtained after disc-milling or hammer-milling and sieving (BS production fines). This shows the advantages of utilizing the fines fractions for a more efficient extraction of the wax.

The DCM extract is softened when exposed to 70°C in an oven and also began to soften at 60°C.

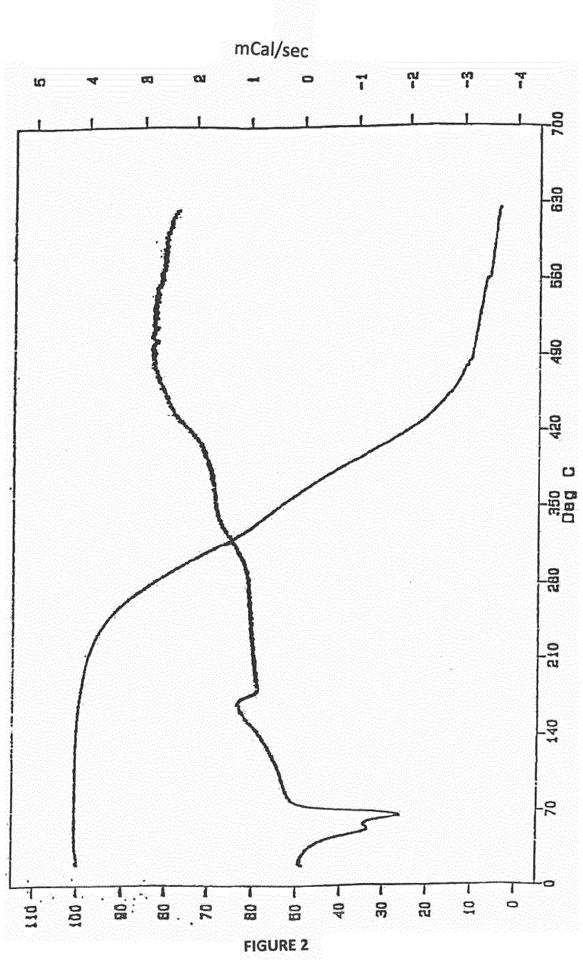

The extract was analysed by differential scanning calorimetry (DSC), which is a thermoanalytical technique in which the difference in the amount of heat required to increase the temperature of a sample is measured as a function of temperature. The temperature program for the DSC analysis was designed such that the sample holder temperature increased linearly as a function of time. A DSC analysis of wheat straw wax is shown in Figure 2. This shows that the wax is stable (no mass loss due to decomposition) up to around 210° C, after which decomposition onsets. The trace shows a clear ENDOTHERM at 65-70° C, due to the wax melt (net absorption of energy during melting). The wax melts at 65-70° C

### Example 3

Based on the results obtained in Example 2, an effective way to extract wax from the straw fines by use of water and without the use of organic solvents was developed.

A methodology to attempt to remove surface wax from the straw using boiling water was tested and worked up. This involved melting a waxy phase (above 70°C) and via agitation dispersing in the water phase.

Trial and error indicated that using a 12: 1 ratio of water to straw matter was preferred under lab conditions to facilitate the presence of "free water" in the vessels used. At lower ratios, insufficient liqueur was available to allow "agitative washing" of the fiber surfaces and mobilization of any melted waxy film.

The following methodology was utilized in a series of lab experiments:
1. 50 g of straw material was added to 600 mls of water; .
2. the mixture is brought to boil together with mechanical or magnetic stirring;
3. the hot mixture is left to simmer (ie gentle boiling) for 30 minutes;
4. the hot mixture is centrifuged at 5,000 rpm for 5 minutes;
5. the liquid phase is decanted and left to evaporate in 600°C oven for 24 hours;
6. residual straw material is carefully recovered and dry in a 60°C oven for 24 hours, reweigh and the mass loss calculate.

Increased agitation is easily achieved in a larger, heated mixer (e.g. Kenwood type, at 3 liter scale). This was tested and the work extended in Example 4.

### Results: hot water (lab method).

| Material Type | Mass extracted (%) |
|---|---|
| Disc mill generated fines | 13.8 |
| Disc mill generated fibre rich | 6.8 |
| BS production fines | 12.6 |

Water has the capacity to also dissolve/ solubilize loose sugars and smaller water soluble molecules from the straw. This is reflected in the higher percentage yields as compared to DCM solvent extraction, which will only dissolve and mobilize waxy compounds. However, the extracted residue (in phase obtained after evaporation of water) showed softening at 70°C, indicating a significant waxy component.

### Example 4

The water based method disclosed above was up-scaled to the level of several liters per batch, with intermittent wet-milling of the hot suspension to increase agitation and mechanical work.

The initial study involved the following steps:
1. 500g of fines were suspended in 5 liters of warm (40°C) water in a heated steel bowl and the temperature was brought to 90°C together with mechanical stirring.
2. Maintenance of heat and stirring for 30 minutes.
3. Passage (manual feed) through a Fryma wet-mill (ie colloid-mill) 3 times during 30 minutes further treatment at 95°C.
4. Samples (50 mls each) removed for centrifugation (5 minutes at 5,000 rpm).
5. Cooling and observation of a separating waxy top layer.

A thin, melted, floating and then solidifying waxy layer was observed after sample centrifugation, but this was not considered quantitatively adequate for up-scaled separation, incorporating no more than 1-2% of the tube depth. This suggested that not all of the available (from solvent extraction analysis) waxy material was removed into that layer.

However, a tan colored solids layer was also noted above the fiber phase and under the liquid supernatant in the centrifuged samples, and this was reminiscent of protein rich layers observed during fractionation treatment of other biomass types, including cereal brans.

It is known that the cuticular waxes are associated with cuticular proteins in grasses/ straws and it was considered that breakdown of these proteins would assist further wax separation. Hence, in a further set of trials, the following regime was investigated/ worked up, at 3 liter scale.
1. 300g of straw fines were suspended in 3 liters of warm (40°C) water in a heated steel bowl and the temperature was brought to 50°C together with mechanical stirring,.
2. Maintenance of heat, adjustment of pH to 7.5 and stirring for 30 minutes.
3. Addition of 0.3 mls of the Novozyme's protease preparation "Alcalase" and stirring for 15 minutes, followed by 3 passages (manual feed) through the Fryma wet-mill over 30 minutes further treatment.
4. Increase of temperature during further mixing to 95°C, to deactivate the enzyme and melt/soften waxy components.
5. Passage (manual feed) through a Fryma wet-mill (ie colloid-mill) 3-times during 30 minutes further treatment at 95°C.
6. Samples (50 mls each) removed for centrifugation (5 minutes at 5,000 rpm).
7. Cooling and observation/ collection of a separating waxy top layer.

A wider and more substantial separated (waxy) top-layer was observed after centrifugation. This shows recovery of substantially more wax (with the separating layer double the width) than in the first basic, non-enzymatic water-based processing described.

### Example 5

The wax extract from Example 4 was resuspended in hot water (10 x water to wax) and heated to 90 °C. The solution was mechanically agitated to help dissolution of sugars and other water solubles. After agitation, the mixture was left to separate into two layers and the non-aqueous layer (the waxy layer) was separated off. The hot water separation was repeated on the waxy fraction.

Further color removal can be effected by mild oxidative (ie oxygen ) bleaching.

Thermal testing (DSC) was performed on the extract to thermally characterize the waxy material. The results are in agreement with the analysis disclosed in Example 2.

### Example 6:

It was noted during an upscaling trial (in which 10 kg batches of straw fines were treated on a wet-fractionation pilot plant, using the same relative proportions of water and alkalase enzyme as in example 5), that after final removal of fibres from the process mix by decanting of filtration, a waxy layer did not clearly separate adequately for clean removal. This was attributed to emulsification of the waxy components during processing by peptides released during the protease hydrolysis. Accordingly, a further lab study was embarked upon, in which the protease enzyme (mainly endo-protease) was changed to a commercial product "Promod", supplied by BioCatalysts Ltd, UK.
1. 300g of straw fines were suspended in 3 liters of warm (40°C) water in a heated steel bowl and the temperature was brought to 50°C together with mechanical stirring.
2. Maintenance of heat, adjustment of pH to 7.5 and stirring for 30 minutes.
3. Addition of 0.05 or 0.1 mls of the Biocatalysts Ltd protease preparation "Promod" and stirring for 15 minutes, followed by 3 passages (manual feed) through the Fryma wet-mill over 30 minutes further treatment.
4. Increase of temperature during further mixing to 95°C, to deactivate the enzyme and melt/soften waxy components.
5. Passage (manual feed) through a Fryma wet-mill (ie colloid-mill) 3-times during 30 minutes further treatment at 95°C.
6. Samples (50 mls each) removed for centrifugation (5 minutes at 5,000 rpm).
7. Cooling and observation/ collection of a separating waxy top layer.

In both cases / enzyme dosages, a more substantial separated (waxy) top-layer was again observed after centrifugation. This shows recovery of substantially more wax (with the separating layer double the width) than in the first basic, non-enzymatic water-based processing described.

## Claims

1. A method for extracting wax from plants, comprising:
a. providing a sample of plant fines enriched in plant wax, wherein the sample of plant fines enriched in wax is resulting from fractionation of straw being mechanically dry-treated at ambient temperature,
b. adding water to the sample of plant fines in a ratio of water:plant fines of at least 5:1 (by weight) followed by mixing and agitation at a temperature adjusted for solubilizing water soluble components in the mixture,
c. adding one or more enzymes to the mixture and adjusting the temperature and pH to optimize the activity of the enzyme(s) added, the enzyme(s) being suitable for degrading proteins associated with the wax in the sample of plant fines,
d. heating the enzyme-treated mixture to a temperature whereby the wax is liquefied and the enzyme(s) inactivated, and
e. separating the wax from the mixture.

2. The method according to claim 1, wherein the mechanical treatment comprised cutting and crushing (chopping).

3. The method according to claim 1 or claim 2, wherein the fractionation is by weight/size.

4. The method according to any one of claim 1-3, wherein the enzyme(s) is/are selected from the group of proteases.

5. The method according to any one of claims 1-4, wherein the plant is selected from cereals, grasses, and sugar cane.

6. The method according to claim 5, wherein the cereal is selected from wheat, rye, barley, oats, sorghum (durra) and rice.

7. The method according to any one of claims 1-6, wherein the sample of plant fines enriched in plant wax comprise wax particles and flakes liberated from the plant matter during the mechanical treatment.

8. The method according to any one of claims 1-7, wherein the enzyme-treated liquid mixture is mechanically treated, e.g. in a wet-mill, to liberate wax associated with the plant matter remains, such as proteins and fibers.

9. The method according to any one of claims 1-8, wherein the remaining plant matters after enzyme treatment and heating are separated and removed from the liquid phase.

10. The method according to any one of claims 1-9, wherein the wax phase is separated from the aqueous phase of the liquid before or after removal of the remaining plant matters.

11. The method according to any one of claims 1-10, wherein the wax is purified by removing remaining impurities from the wax phase.

12. The method according to claim 9, wherein the solids in the remaining plant matter is pressed to pellets for use in a combustion process.

## Patentansprüche

1. Verfahren zur Extraktion von Wachs aus Pflanzen, umfassend:
a. Bereitstellen einer Probe von mit Pflanzenwachs angereichertem pflanzlichen Feinmaterial, wobei die Probe von mit Wachs angereichertem pflanzlichen Feinmaterial aus der Fraktionierung von Stroh stammt, das bei Umgebungstemperatur mechanisch trocken behandelt wurde,
b. Zugeben von Wasser zu der Probe des pflanzlichen Feinmaterials in einem Verhältnis von Wasser zu pflanzlichem Feinmaterial von mindestens 5 zu 1 (nach Gewicht), gefolgt von Mischen und Rühren bei einer Temperatur, die so eingestellt ist, dass die wasserlöslichen Bestandteile in der Mischung löslich gemacht werden,
c. Zugeben eines oder mehrerer Enzyme zu der Mischung und Einstellen der Temperatur und des pH-Werts, um die Aktivität des/der zugegebenen Enzyms/Enzyme zu optimieren, wobei das/die Enzym(e) geeignet ist/sind, mit dem Wachs assoziierte Proteine in der Probe des pflanzlichen Feinmaterials abzubauen,
d. Erhitzen der enzymbehandelten Mischung auf eine Temperatur, bei der das Wachs verflüssigt und das/die Enzym(e) inaktiviert wird/werden, und
e. Trennen des Wachses von der Mischung.

2. Verfahren nach Anspruch 1, wobei die mechanische Behandlung Schneiden und Zerkleinern (Hacken) umfasst.

3. Verfahren nach Anspruch 1 oder Anspruch 2, wobei die Fraktionierung nach Gewicht/Größe erfolgt.

4. Verfahren nach einem der Ansprüche 1-3, wobei das/die Enzym(e) aus der Gruppe der Proteasen ausgewählt ist/sind.

5. Verfahren nach einem der Ansprüche 1-4, wobei die Pflanze aus Getreide, Gräsern und Zuckerrohr ausgewählt wird.

6. Verfahren nach Anspruch 5, wobei das Getreide aus Weizen, Roggen, Gerste, Hafer, Sorghum (Durra) und Reis ausgewählt wird.

7. Verfahren nach einem der Ansprüche 1-6, wobei die mit Pflanzenwachs angereicherte Probe von pflanzlichem Feinmaterial Wachspartikel und -flocken umfasst, die während der mechanischen Behandlung aus dem Pflanzenmaterial freigesetzt werden.

8. Verfahren nach einem der Ansprüche 1-7, wobei die enzymbehandelte flüssige Mischung mechanisch behandelt wird, z. B. in einer Nassmühle, um das mit den Pflanzenmaterialresten assoziierte Wachs, wie Proteine und Fasern, freizusetzen.

9. Verfahren nach einem der Ansprüche 1-8, wobei das nach der Enzymbehandlung und Erhitzung verbleibende Pflanzenmaterial abgetrennt und aus der flüssigen Phase entfernt wird.

10. Verfahren nach einem der Ansprüche 1-9, wobei die Wachsphase von der wässrigen Phase der Flüssigkeit vor oder nach der Entfernung des verbleibenden Pflanzenmaterials abgetrennt wird.

11. Verfahren nach einem der Ansprüche 1-10, wobei das Wachs durch Entfernen der verbleibenden Verunreinigungen aus der Wachsphase gereinigt wird.

12. Verfahren nach Anspruch 9, wobei die Feststoffe im verbleibenden Pflanzenmaterial zu Pellets für die Verwendung in einem Verbrennungsprozess gepresst werden.

## Revendications

1. Procédé pour extraire la cire de plantes, comprenant :
a. la fourniture d'un échantillon de fines végétales enrichies en cire végétale, dans lequel l'échantillon de fines végétales enrichies en cire est issu d'un fractionnement de paille étant traitée mécaniquement à sec à température ambiante,
b. l'ajout d'eau à l'échantillon de fines végétales dans un rapport eau sur fines végétales d'au moins 5:1 (en poids) suivi du mélange et de l'agitation à une température ajustée pour solubiliser des composants hydrosolubles dans le mélange,
c. l'ajout d'une ou plusieurs enzymes au mélange et l'ajustement de la température et du pH pour optimiser l'activité de la ou des enzymes ajoutées, la ou les enzymes étant appropriées pour dégrader des protéines associées à la cire dans l'échantillon de fines végétales,
d. le chauffage du mélange traité aux enzymes à une température selon laquelle la cire est liquéfiée et la ou les enzymes sont inactivées, et
e. la séparation de la cire du mélange.

2. Procédé selon la revendication 1, dans lequel le traitement mécanique comprend la coupe et le concassage (hachage).

3. Procédé selon la revendication 1 ou la revendication 2, dans lequel le fractionnement s'effectue par poids/taille.

4. Procédé selon l'une quelconque des revendications 1-3, dans lequel la ou les enzymes est/sont sélectionnées dans le groupe des protéases.

5. Procédé selon l'une quelconque des revendications 1-4, dans lequel la plante est choisie parmi les céréales, les graminées et la canne à sucre.

6. Procédé selon la revendication 5, dans lequel la céréale est choisie parmi le blé, le seigle, l'orge, l'avoine, le sorgho (durra) et le riz.

7. Procédé selon l'une quelconque des revendications 1-6, dans lequel l'échantillon de fines végétales enrichies en cire végétale comprend des particules de cire et des flocons libérés de la matière végétale pendant le traitement mécanique.

8. Procédé selon l'une quelconque des revendications 1-7, dans lequel le mélange liquide traité aux enzymes est traité mécaniquement, par exemple dans un broyeur humide, pour libérer la cire associée aux restes de matière végétale, tels que des protéines et des fibres.

9. Procédé selon l'une quelconque des revendications 1-8, dans lequel les matières végétales restantes après traitement aux enzymes et chauffage sont séparées et éliminées de la phase liquide.

10. Procédé selon l'une quelconque des revendications 1-9, dans lequel la phase cireuse est séparée de la phase aqueuse du liquide avant ou après l'élimination des matières végétales restantes.

11. Procédé selon l'une quelconque des revendications 1-10, dans lequel la cire est purifiée en éliminant les impuretés restantes de la phase cireuse.

12. Procédé selon la revendication 9, dans lequel les solides contenus dans la matière végétale restante sont pressés en granulés destinés à être utilisés dans un processus de combustion.
